# EUROPÄISCHE PATENTANMELDUNG

(11) **EP 1 338 400 A1**
(43) Veröffentlichungstag der Anmeldung: **27.08.2003**
(21) Anmeldenummer: 03003064.7
(22) Anmeldetag: 12.02.2003
(51) Int. Cl.: B29C 47/16, B29C 47/08

(54) **Plastifikatdüse zum Austragen einer plastifizierten Kunststoffmasse aus einem Extruder**

(30) Priorität: 13.02.2002 DE 10205899
(71) Anmelder: Maschinenfabrik J. Dieffenbacher GmbH & Co., 75020 Eppingen (DE)
(72) Erfinder: Brüssel, Richard, 75056 Sulzfeld (DE)
(74) Vertreter: Hartdegen, Anton

(57) **Zusammenfassung**

Die Erfindung betrifft eine Plastifikatdüse zum Austragen einer in einem Extruder plastifizierten Kunststoffmasse, insbesondere einer faserverstärkten, plastifizierten Kunststoffmasse und mit einer die Kunststoffmasse als Plastifikatstrang in ihrer Dicke einstellbaren Düsenverstellvorrichtung, wobei die Plastifikatdüse (1) in ein oberes starres Düsenformstück (9) und in ein unteres, die Höhe der Düsenöffnung (6) veränderbares, bewegliches Düsenformstück (10) geteilt ist und die zwei Düsenformstücke (9 und 10) mit einem Düsenadapter (4) verbunden sind, der auswechselbar am Extruderflansch (19) angebracht ist.

## Beschreibung

Die Erfindung betrifft eine Plastifikatdüse zum Austragen einer plastifizierten Kunststoffmasse aus einem Extruder nach dem Oberbegriff des Anspruches 1.

Durch die DE 100 02 612 A1 ist ein Laufstreifen-Spritzkopf bekannt geworden, der einen Dickenverstellschieber für die Höhe der austretenden Gummimischung aufweist, wobei auch seitliche einstellbare Flankenschablonen vorgesehen sind. Die Erfindung ist damit beschrieben, dass der Spritzkopf schwenkbar an dem Extruder angelagert ist und eine der Extruderschnecke zugewandte Ausnehmung aufweist, in welche mindestens ein Fliesskanaleinsatz einsetzbar ist.

Der vorliegenden Erfindung liegt die Aufgabe zugrunde, eine strömungsgünstige Plastifikatdüse zu schaffen, mit der die Düsenöffnung von geschlossen/gequetscht bis zur vollen Düsenöffnung mit einem Servoantrieb betätigt werden kann, mit der kürzeste Stellzeiten (ca. 0,2 s) erreichbar sind und mit der die Plastifikatdüse relativ schnell auswechselbar ist, sowie mit der kurze Schliesszeiten ohne übermässigen Nachfluss des Plastifikats zu erreichen sind.

Die Lösung dieser Aufgabe besteht darin, dass die Plastifikatdüse in ein oberes starres Düsenformstück und in ein unteres, die Höhe der Düsenöffnung veränderbares, bewegliches Düsenformstück geteilt ist und die zwei Düsenformstücke mit einem Düsenadapter verbunden sind, der auswechselbar am Extruderflansch angebracht ist.

Insbesondere wird in vorteilhafter Weise durch die Lösung erreicht, dass kurze Stellzeiten ohne nennenswerten Materialnachfluss gewährleistet sind, damit bei hohen Austragsleistungen die Plastifikatdicke über die Plastifikatlänge mit grosser Präzision für das presstechnisch optimierte Materialangebot in die Kavität ausgetragen werden kann. Zusätzlich kann die Plastifikatdüse mit dem Düsenadapter relativ schnell gewechselt werden, um bei einem Produktwechsel mit anderer Düsenbreite zu arbeiten. Der Düsenwechsel ist auch bei unterschiedlichen Temperaturen von Plastifikatdüse zu Extruderflansch mit einer Wechselvorrichtung möglich.

Die Lehre ist auch darin zu sehen, dass über die geteilte Plastifikatdüse mit Düsenadapter die Verbindung vom Extruderflansch bis zur eigentlichen Plastifikatdüse hergestellt ist. Im Adapterkanal von der Extruderbohrung zu dem Rechteckquerschnitt der Plastifikatdüse sind dafür je nach Querschnittsänderung Verteilerwiderstände/Formkörper integriert, welche den Plastifikatfluss auf die entsprechende Düsenbreite möglichst gleichmässig verteilen ist in der erfindungsgemässen Plastifikatdüse weiter unten ein Stellantrieb, welcher servomotorisch oder hydraulisch sein kann, angebaut. Die eigentliche Plastifikatdüse ist gemäss der Erfindung mit den Seitenteilen und dem oberen Düsenformteil an dem Düsenadapter fest angebracht. Während das untere Düsenformteil auf einer Welle zwischen den beiden Seitenteilen drehbar gelagert ist. Über Hebel und Koppelstange wird die Verbindung zum Stellantrieb hergestellt. Dass das bewegliche untere Düsenformstück nach unten gelegt wurde, hat den Vorteil, dass ein strömungsgünstiger Materialfluss um die gross dimensionierte Welle möglich ist.

Bei einer Plastifikatdicke mit d von 5 - 55 mm wird der Düsenkanal am Ansatzpunkt des Teiles 10 mit ca. d/2 ausgelegt. Dadurch wirkt der Kanal im Bereich <d/2 als Düse bei >d/2 als Difusor. Beide Situationen sind jedoch durch diese Gestaltung so ausgelegt, dass die Fliessgeschwindigkeit in der Plastifikatmitte bei der Düse nicht zu hoch und an den Plastifikaträndern beim Difusor nicht zu langsam ist.

Nach dem Stand der Technik war bisher der bewegte Düsenteil oben. Die Formgebung und die Welle zur Düsenöffnung bieten den Vorteil, dass durch die bewegliche Auslasskante zu den Seitenteilen bei verschiedenen Düsenöffnungen nahezu kein Versatz entsteht. Damit wird ein sauberer Ausfluss des Plastifikatstranges erreicht. Weiter ist damit auch ein Abschneiden direkt an der Düse möglich. Hierzu gehört auch der ca. 90°-Winkel zur Fläche der Auslasskante. Nur unter dieser Bedingung bildet das obere Düsenformstück zum beweglichen unteren Düsenformstück an der Auslasskante eine Ebene. Damit ragt kein Teil des unteren Düsenformstückes über die Auslasskante hinaus beim Öffnen der Plastifikatdüse.

Weitere vorteilhafte Massnahmen und Ausgestaltungen des Gegenstandes der Erfindung gehen aus den Unteransprüchen und der folgenden Beschreibung mit der Zeichnung hervor.

Es zeigen:
- Figur 1: in schematischer Darstellung die Plastifikatdüse gemäss der Erfindung in Seitenansicht und
- Figur 2: die Plastifikatdüse nach Figur 1 in Draufsicht.

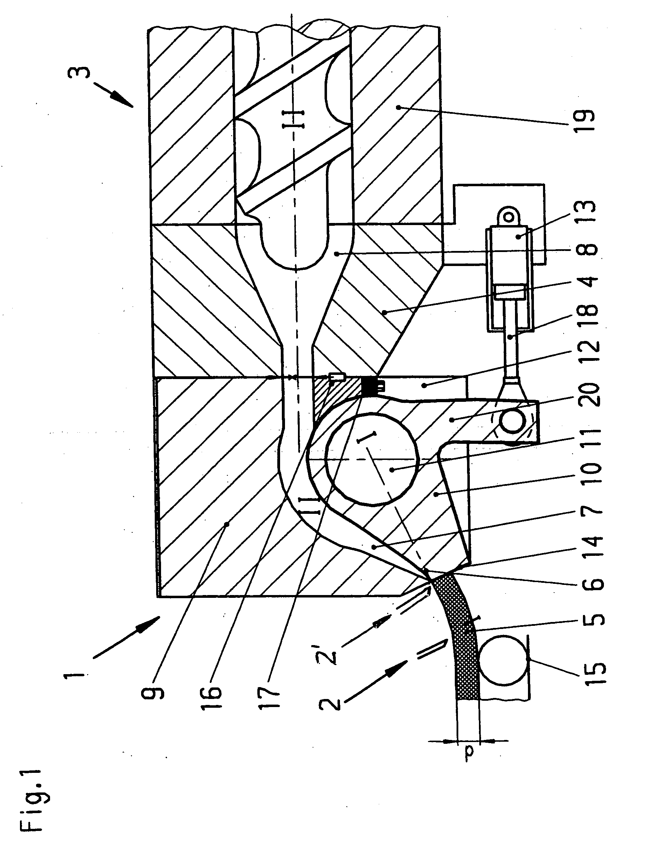

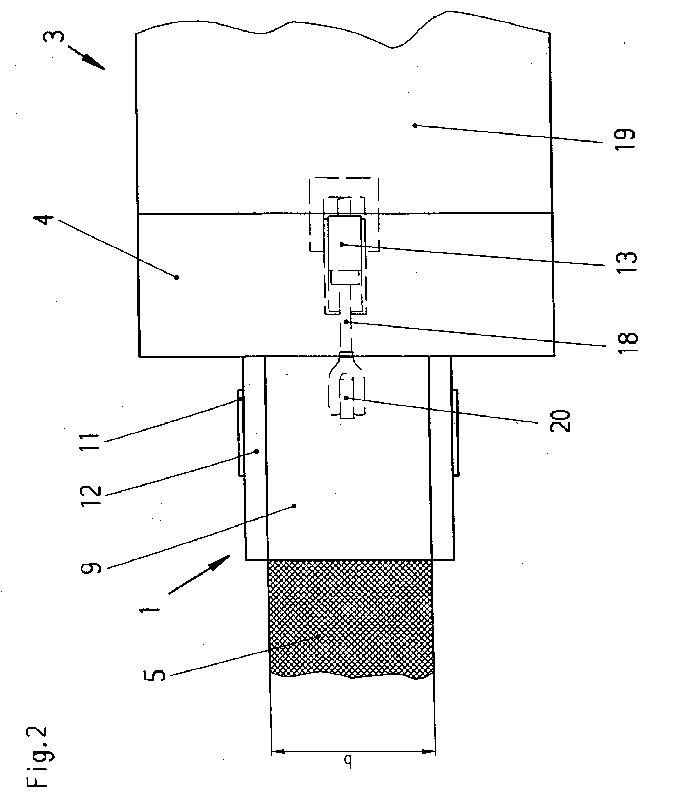

Die Zeichnung mit den Figuren 1 und 2 zeigt die Plastifikatdüse 1 gemäss der Erfindung zwei geteilt und bestehend aus einem am Düsenadapter 4 des Extruders 3 fest aber zusammen mit dem Düsenadapter 4 auswechselbar am Extruderflansch 19 angeordneten Düsenformstückes 9 mit Seitenteilen 12 und daran beweglich angeordneten, mit dem die Düsenöffnung 6 in der Höhe (entspricht der Plastifikatdicke d) variabel einstellbar ist. Das untere Düsenformstück 10 ist dafür auf der in ihr angeordneten Welle 11 drehbar und mittels einem am Düsenadapter 4 befestigten Stellantrieb 13 verstellbar, wodurch die Düsenöffnung 6 für eine variable Dicke d des austretenden Plastifikats 5 einstellbar ist. Zwischen der Extruderbohrung 8 auf der Extruderachse II-II und ab der kurvenmässigen Ablenkung daraus im Düsenformstück 9 ist ein Düsenkanal 7 bis zur Düsenöffnung 6 konisch ausgeführt. Die Höhe der Düsenöffnung 6 wird somit mittels Verstellung des Düsenformstückes 10 auf der Stell- und Auslassachse I-I durch Drehung der Welle 11 durchgeführt, wobei die Auslasskante 14 bei geschlossener Düsenöffnung 6 mit der Stell- und Auslassachse I-I des unteren Düsenformstückes 10 einen rechten Winkel von 90° bildet. Für die reibarme Drehung des unteren Düsenformstückes 10 am Düsenadapter 4 ist dazwischen eine elastische, unter Federdruck stehende Abdichtung 17 mit darüber angebrachten schwimmendem Füllkörper 16 vorgesehen.

Die Länge des aus der Düsenöffnung 6 austretenden Plastifikats wird mittels einer Schneidvorrichtung 2 je nach Bedarf abgeschnitten und als Plastifikat 5 von einem Abzugsband 15 abgeführt. Der Schnitt ist mit der Schneidvorrichtung 2' auch direkt an der Auslasskante 14 wahlweise möglich. Die Figur 2 zeigt die Plastifikatdüse 1 in Draufsicht. Die Zeichnung zeigt weiter die Änderung der Düsenöffnung 6 mittels des Stelltriebes 13 über die Koppelstange 18, die als Zylinderkolben den Hebel 20 und damit das Düsenformstück 10 hebt oder senkt.

### Bezugszeichenliste:

1. Plastifikatdüse
2. Schneidvorrichtung
3. Extruder
4. Düsenadapter
5. Plastifikat
6. Düsenöffnung
7. Düsenkanal
8. Extruderbohrung
9. Düsenformstück fest, oben
10. Düsenformstück beweglich, unten
11. Welle
12. Seitenteile
13. Stellantrieb
14. Auslasskante
15. Abzugband
16. Füllkörper
17. Abdichtung
18. Koppelstange
19. Extruderflansch
20. Hebel

- X-X: Drehachse Antriebswelle 11
- I-I: Stell- und Auslassachse Düsenformstück 10
- II-II: Extruderachse
- d: Plastifikatdicke
- b: Plastifikatbreite

## Patentansprüche

1. Plastifikatdüse zum Austragen einer in einem Extruder plastifizierten Kunststoffmasse, insbesondere einer faserverstärkten, plastifizierten Kunststoffmasse und mit einer die Kunststoffmasse als Plastifikatstrang in ihrer Dicke einstellbaren Düsenverstellvorrichtung, **dadurch gekennzeichnet, dass** die Plastifikatdüse (1) in ein oberes starres Düsenformstück (9) und in ein unteres, die Höhe der Düsenöffnung (6) veränderbares, bewegliches Düsenformstück (10) geteilt ist und die zwei Düsenformstücke (9 und 10) mit einem Düsenadapter (4) verbunden sind, der auswechselbar am Extruderflansch (19) angebracht ist.

2. Plastifikatdüse nach Anspruch 1, **dadurch gekennzeichnet,dass** das untere Düsenformstück (10) drehbar auf einer darin angeordneten Welle (11) die in Seitenteilen (12) gelagert ist und mittels an der Welle (11) oder an einem Hebel (20) am Düsenformstück (10) angelenkten Stellantrieb (13) verstellbar ausgeführt ist.

3. Plastifikatdüse nach Anspruch 1 und 2, **dadurch gekennzeichnet,dass** von der Extruderbohrung (8) bis zur Düsenöffnung (6) im Düsenkanal (7) das Plastifikat über Leitverteiler und Formkörper in zu ändernde Querschnittsformen gleichmässig zwangsgeführt wird.

4. Plastifikatdüse nach den Ansprüchen 1 bis 4, **dadurch gekennzeichnet,dass** ein unten angebauter servomotorischer oder -hydraulischer Stellantrieb (13) für das Düsenformstück (10) vorgesehen ist.

5. Plastifikatdüse nach den Ansprüchen 1 bis 3, **dadurch gekennzeichnet,dass** über Antriebshebel (20) und Koppelstangen (18) die Verbindung vom Stellantrieb (13) zur Welle (11) hergestellt ist.

6. Plastifikatdüse nach den Ansprüchen 1 bis 5, **dadurch gekennzeichnet,dass** die Auslasskante (14) bei geschlossener Düsenöffnung (6) mit der Stell- und Auslassachse (I-I) des unteren Düsenformstücks (10) einen rechten Winkel (90°) bildet.

7. Plastifikatdüse nach einem oder mehreren der Ansprüche 1 bis 6, **dadurch gekennzeichnet,dass** der Düsenkanal (7) in etwa ab Kontaktnahme mit dem darin kreisförmig ausgeführten unteren Düsenformstück (10) bis zur Düsenöffnung (6) konisch ausgeführt ist.

8. Plastifikatdüse nach einem oder mehreren der Ansprüche 1 bis 7,
**dadurch gekennzeichnet,dass** dasuntere Düsenformstück (10) am Düsenadapter (4) über einen schwimmenden Füllkörper (16) und einer elastischen Abdichtung (17) angebracht ist.

9. Plastifikatdüse nach einem oder mehreren der Ansprüche 1 bis 8, **dadurch gekennzeichnet, dass** der Stellantrieb (13) am Düsenadapter (4) befestigt ist.
